(19) Europäisches Patentamt
European Patent Office
Office européen des brevets

(11) Publication number: **0 389 967 A2**

(12) **EUROPEAN PATENT APPLICATION**

(21) Application number: **90105454.4**

(22) Date of filing: **22.03.90**

(51) Int. Cl.5: **C10M 137/02, C10M 137/12, C10M 169/04, C10M 173/00, //(C10M169/04,105:32,107:02, 107:08,107:34,137:02,137:12), (C10M173/00,137:02,137:12), C10N40:24**

(30) Priority: **27.03.89 US 329264**

(43) Date of publication of application: **03.10.90 Bulletin 90/40**

(84) Designated Contracting States: **DE FR GB**

(71) Applicant: **ALUMINUM COMPANY OF AMERICA**
**Alcoa Building**
**Pittsburgh Pennsylvania(US)**

(72) Inventor: **Laemmle, Joseh T.**
**170 Surrey Drive**
**Delmont 15626(US)**
Inventor: **Bohaychick, John**
**4164 Frederick Drive**
**New Kensington 15068(US)**
Inventor: **Malacki, Evangelia D.**
**73 Woodland Farms Road**
**Pittsburgh(US)**

(74) Representative: **Baillie, Iain Cameron et al**
**c/o Ladas & Parry Isartorplatz 5**
**D-8000 München 2(DE)**

(54) **Compositions useful as lubricants.**

(57) The present invention includes an organic molecular composition including carboxylic acid functionality, ester functionality, phosphine, phosphite or phosphate extreme pressure functionality, and, in one aspect, at least one organic ether linkage within the same molecule. In another aspect, a double bond film-forming functionality is included in the molecular composition. The composition is useful as a lubricant and can be provided, in one aspect, by reacting tris-hydroxymethyl phosphine oxide or by reacting tris(oxyalkylene glycol) phosphite or phosphate with an alkyl, alkaryl, aralkyl, or alkenyl succinic acid or alkyl, alkaryl, aralkyl, or alkenyl succinic anhydride.

EP 0 389 967 A2

## NOVEL COMPOSITIONS USEFUL AS LUBRICANTS

This invention relates to an organic phosphorus compound useful as a lubricant, and relates to a novel class of organic molecular phosphite or phosphate compounds containing, in one aspect, one or more ether linkages. The novel class of organic molecular compounds is useful as a lubricant.

Lubricant formulations employ numerous additives for friction modification. Certain formulations contain various film-forming additives with a variety of functional groups relying on selective adsorption. Certain formulations particularly suited for ferrous metals rely on film-forming additives to be adsorbed selectively at low temperatures and extreme pressure additives, which undergo selective chemical reaction with ferrous metal surfaces, at high temperatures. The extreme pressure additives contain phosphorus, chlorine, sulphur, or combinations of these for forming a chemical reaction layer.

U.S. Patent No. 3,580,849 discloses that high pressure properties of mineral oils are improved by adding certain chemical ingredients. Phosphorus containing compounds, for this purpose, include esters of phosphoric acid, thiophosphoric acid, chloroparaffins, and the like. These compounds react at elevated temperatures with metal surfaces to form firmly adhering reaction layers which prevent seizing.

Most high pressure additives used in mineral oils are insoluble in other systems or are unsuitable in the presence of water because of high corrosivity. Glycols and glycol ethers and ester mixtures also in aqueous systems are used for hydraulic fluids, for example, in mining and metallurgy. A serious drawback of liquids of this type is a poor protection property against wear. Roller bearings and ball bearings, for example, when operated in liquids of this type have only 12 to 15% of the working life compared to the use of hydraulic oils on the basis of mineral oils. Protection against wear of actuating fluids for hydraulically operated mechanisms consisting of mixtures of glycols and polyglycols, their ethers, or their aqueous solutions can be improved by adding 0.15 to 20% by weight, preferably 1 to 8% by weight, of tris-hydroxymethyl phosphine oxide or phosphine sulfide as well as their oxyalkylation products with up to 5 moles of ethylene oxide or propylene oxide per mole of phosphine oxide or phosphine sulfide. U.S. Patent No. 3,580,849 thereby discloses lubricants for the protection against wear of actuating fluids for hydraulically operated mechanisms obtained by the addition of tris-hydroxymethyl phosphine oxide as well as the oxyalkylation products thereof. The patent discloses lubricants corresponding to the general formula as shown in Equation 1.

Equation 1:

$$\left[ H - (OCH_2-\underset{H}{\overset{R}{C}})_n - OCH_2- \right]_3 - P=X$$

in which X stands for S or O, R is $CH_3$ or H and n has the meaning 0-5/3.

U.S. Patent No. 3,271,310 discloses an increased demand in the lubricant additive field for more efficient heavy-duty lubricants. This demand has prompted the development of additives which exhibit dual purposes, e.g., additives which act as rust inhibitors and detergents. Such a dual purpose additive is available by providing a metal salt of a hydrocarbon-substituted succinic acid having at least about 50 aliphatic carbon atoms in the hydrocarbon substituent, the metal of said metal salt being selected from the class consisting of Group I metals, Group II metals, aluminum, lead, tin, cobalt, and nickel.

The hydrocarbon-substituted succinic compounds of the metal salt compositions can be obtained from the reaction of maleic anhydride or maleic acid and a high molecular weight olefin or a chlorinated hydrocarbon or other high molecular weight hydrocarbon containing an activating polar substituent, i.e., a substituent capable of activating the hydrocarbon molecule in the reaction with maleic anhydride or the acid thereof. The resulting product is a hydrocarbon-substituted succinic anhydride. The succinic anhydride may be hydrolyzed to the corresponding acid by treatment with water or steam. The hydrocarbon-substituted succinic acid is preferred.

U.S. Patent No. 3,242,217 discloses producing organic phosphorus compounds, particularly substantially pure phosphinylidynetrimethanol and certain trialkanoates obtained from said

phosphinylidynetrimethanol. The patent discloses the preparation of triesters from tris-hydroxymethyl phosphine oxide and various organic acids, and that the compounds possess very good thermal stability and are useful as functional fluids, e.g., as lubricants. The disclosure contained in U.S. Patent No. 3,242,217 is shown in the chemical reaction of Equation 2.

Equation 2:

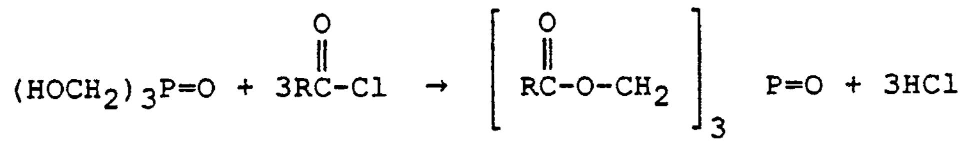

U.S. Patent No. 4,474,675 discloses a synthetic lubricant base stock compound prepared by the reaction of phosphine with acrylic acid ester. The products are tris-hydroxyethyl compounds. The equation for the production of these compounds is shown in Equation 3. The products do not contain carboxylic acid or double bond functionality.

Equation 3:

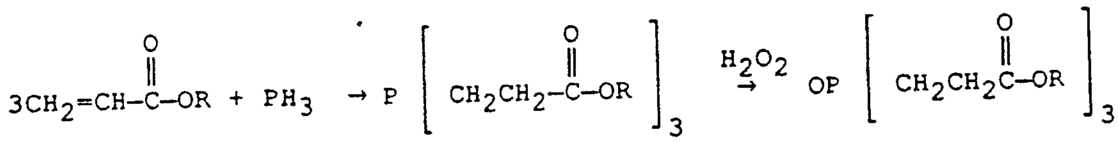


The present invention includes an organic molecular composition including carboxylic acid functionality, ester functionality, phosphine, phosphite or phosphate extreme pressure functionality, and for certain compositions, ether linkage within the same molecule. In one aspect, a double bond film-forming functionality is included in the molecule composition. The composition is useful as a lubricant and can be provided, in one aspect, by reacting tris-hydroxymethyl phosphine oxide or tris(oxyalkylene glycol) phosphite or phosphate with an alkyl, alkaryl, aralkyl, or alkenyl succinic acid or alkyl, alkaryl, aralkyl, or alkenyl succinic anhydride.

The Figure depicts a comparative evaluation of conventional lubricant additives with the lubricant composition of the present invention.

In accordance with the present invention, a novel class of compounds and a method for preparing these compounds are provided. The present invention also provides a novel class of lubricant additives formed by the composition disclosed and claimed herein.

Lubricant formulations employ numerous additives for friction modification. Certain formulations contain various film-forming additives with a variety of functional groups relying on selective adsorption. Certain other formulations particularly suited for ferrous metals rely on film-forming additives to be adsorbed selectively at low temperatures and other extreme pressure additives containing phosphorus, chlorine, or sulphur or combinations of these to be adsorbed selectively at high temperatures for forming a chemical reaction layer.

The novel organic molecular compositions contain several elements in molecular relationship including carboxylic acid, ester film-forming functionality, phosphite or phosphate extreme pressure functionality within the same molecule, and, in one aspect, one or more organic ether linkages again within the same molecule. Optionally, a double bond film-forming functionality may be included in the same molecule.

The novel compositions provide the disclosed elements in one molecule. The compositions contain multiple functionalities and keep these functionalities adjacent the surface at a distance of less than one molecular layer of the surface during use. The compositions contain acid, ester, and either phosphate or phosphite, and optionally a double bond or ether. Acid, ester, double bond, and, to an extent, ether are all surface adsorbing groups. When the first group on a molecule adsorbs, then the remaining groups are within a molecular layer of the surface and readily available for reaction with that surface. This leads to

more effective response in use as lubricants or lubricant additives. Moreover, the need for multiple additives is reduced and in some cases not required in formulated lubricants or lubricant additives containing the new compositions of the present invention, and component analysis is simplified.

The new compositions of the present invention are prepared, in one aspect, by reacting tris(oxyalkylene glycol) phosphite or tris(oxyalkylene glycol) phosphate with alkyl-, alkaryl-, and alkenyl-substituted succinic acid or alkyl-, alkaryl-, and alkenyl-substituted succinic anhydride. Optionally, the phosphates can be prepared by reacting the tris(oxyalkylene glycol) phosphite with the substituted succinic anhydride (or acid) followed by oxidation of the product. Nevertheless, the succinic anhydride is the preferred starting material to form the composition of the present invention because the reaction employing the anhydride provides more uniform product materials than when using succinic acid as the reactant.

<u>Equation 3:</u>

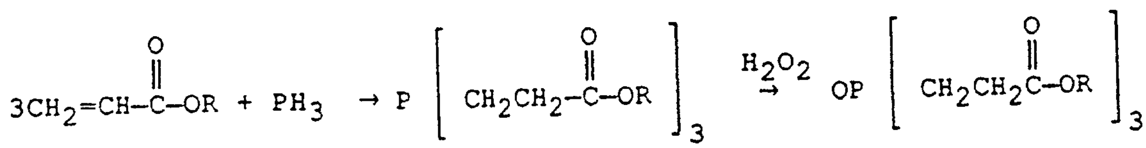


where:
N = 1-3
$R_1$ = hydrogen, alkyl, alkaryl, aralkyl, or alkenyl isomer (up to C-20)
x = 0-50
y = 0-50
x + y = ≧ 1

Specific examples of product compounds provided by our invention are shown in Equation 5 and Equation 6:

Equation 5:

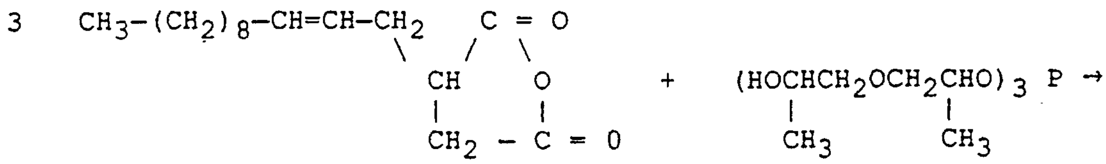

2-dodecenyl succinic anhydride

tris(dipropylene glycol) phosphite

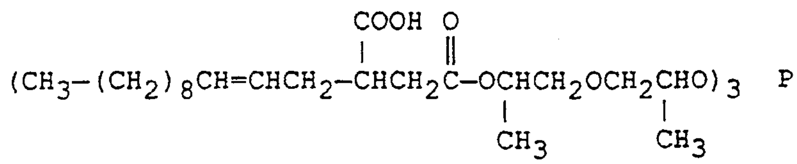

and

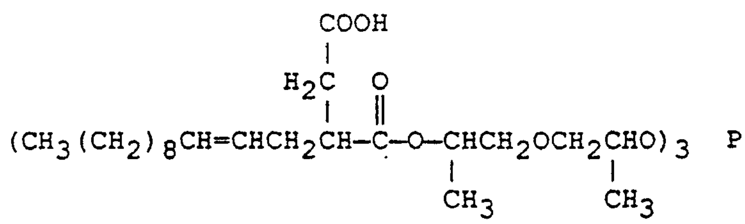

(isomer)

Equation 6:

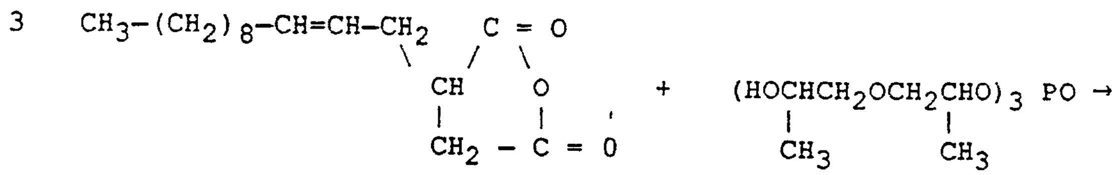

2-dodecenyl succinic anhydride

tris(dipropylene glycol) phosphate

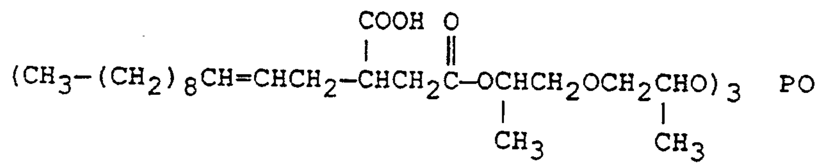

and

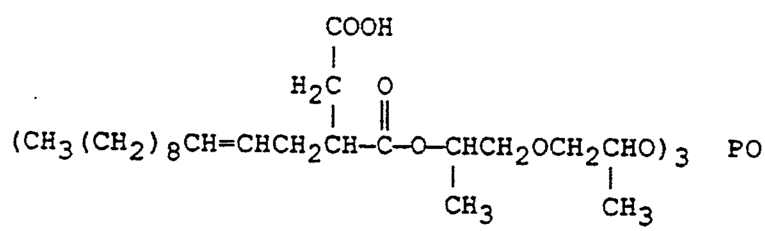

(isomer)

The new lubricant additives of the present invention are also prepared by reacting tris-hydroxymethyl phosphine oxide with alkyl-, alkaryl-, and alkenyl-substituted succinic acid or alkyl-, alkaryl-, and alkenyl-substituted succinic anhydride. Nevertheless, the succinic anhydride is the preferred starting material to form the composition of the present invention because the reaction employing the anhydride provides more uniform product materials than when using succinic acid as the reactant.

Equation 7:

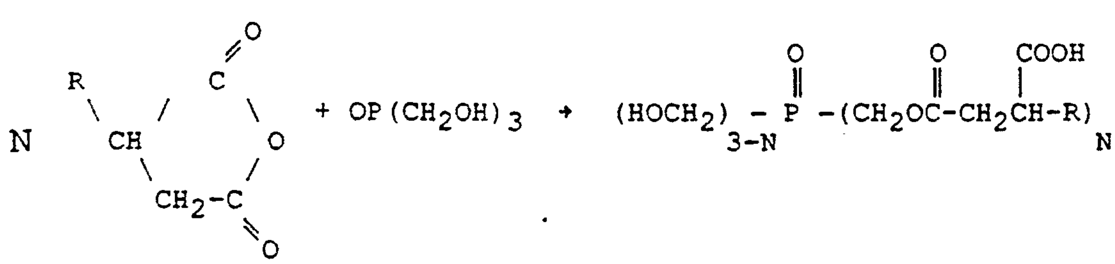

where

R = hydrogen, alkyl, alkaryl, aralkyl, or alkenyl isomer (up to C-20)

N = 1-3

Specific examples of product compounds provided by our invention are shown in Equation 8 and Equation 9:

Equation 8:

$$OP(CH_2O\overset{O}{\overset{\|}{C}}-CH_2\underset{}{\overset{COOH}{\overset{|}{C}}}H-CH_2CH=CH-(CH_2)_{12}-\overset{CH_3}{\overset{|}{C}}H-CH_3)_3$$

tris methylene-3-carboxyl-isoeicosenyl phosphine oxide

Equation 9:

$$OP(CH_2O\overset{O}{\overset{\|}{C}}-CH_2\overset{COOH}{\overset{|}{C}}H-CH_2-CH=CH-(CH_2)_8-CH_3)_3$$

tris methyl-3-carboxyl-tetradecenyl phosphine oxide

The mole ratio of the reactants to produce the lubricant of the present invention may extend from 1:1 to 3:1 as shown in Equation 5. A three to one mole ratio is illustrated by the following description in an actual example to provide the synthesis of tris methylene-3-carboxyl-isoeicosenyl phosphine oxide. Three moles (798 g) of 2-dodecen-1-yl succinic anhydride and one mole (140 g) of tris-hydroxymethyl phosphine oxide were added to a two liter round bottom flask. The flask was fitted with a reflux condenser and purged with nitrogen to prevent oxidation of the materials during reaction. The contents of the flask were heated to 150 °C, which is above the melting point of the reactants, by means of a heating mantel and stirred with a Teflon stirring bar for three hours. The progress of the reaction was followed in the infrared spectrum by noting the disappearance of the 2-dodecen-1-yl succinic anhydride bands at 1870 $cm^{-1}$ and 1790 $cm^{-1}$ and the appearance of a carboxylic acid band at 1710 $cm^{-1}$ and an organic ester band at 1740 $cm^{-1}$. The reaction was considered complete when the anhydride bands had totally disappeared. The reaction flask was allowed to cool to room temperature and the new material, a bright yellow liquid, was used in the tests described below in Example 3 and Example 4.

The reaction is direct and goes to completion as evidenced by the total disappearance of anhydride absorbance and the appearance of equivalent intensities of ester and acid absorbance in the infrared spectrum. The new lubricant additive compounds contain organic acid and ester film-forming functionalities and extreme pressure functionality. In addition, organic ether linkages or carbon-carbon double bonds have been shown to form reaction products with nascent aluminum surfaces.

The additives may be solubilized directly in natural or synthetic hydrocarbon oils for use as lubricants. The additives also may be employed as components in water soluble or water dispersible lubricants, including as alkali metal salts, alkaline earth metal salts, or amine salts. They also may be used as zinc, lead, tin, or molybdenum salts.

Specific additives were subjected to generally accepted tests for film-forming and friction-modifying characteristics and for extreme pressure characteristics. The Jahanmir techniques were employed for evaluating film-forming and friction-modifying characteristics. Additives are ranked by friction at less than full surface coverage, by concentration at which full surface coverage first occurs, and by friction coefficient at full surface coverage. The MOFISS (moving film stationary sled) tribotester was employed for these evaluations.

## Example 1

A strip of lubricated aluminum was pulled at 0.1524 m/min under a weighted sled restrained by a chain connected to a transducer for measuring frictional force. The sled was supported by three ball bearings. The test was carried out under low viscosity, highly loaded conditions, and measured boundary friction. At low velocity, friction is proportional to the equilibrium concentration of additive absorbed on the strip surface

and independent of the rate of absorption within the rate limits additives are believed to react. The base oil was Exxon Norpar 15 (TM) linear paraffin having a viscosity of 2.49 $mm^2 \cdot s^{-1}$ at 40 °C. The base oil provided essentially no boundary protection and gave a friction coefficient of 0.311. The friction coefficient of Norpar 15 (TM) containing additives will be lower than this value and will reach a minimum at that concentration where full surface coverage first occurs and will remain constant at higher additive concentrations. The minimum coefficient of friction reached by each additive and the concentration required to reach this minimum are measures of effectiveness of the additive. In general, additives which give lower coefficients of friction at full surface coverage and reach these minimum friction coefficients at lower concentrations are considered more effective.

Typical film-forming, friction-modifying additives are long-chain organic compounds containing a functional group, i.e., alcohol, ester, carboxylic acid, amine, or amide. In these evaluations, an additive in accordance with the present invention was compared to three conventional additives. The additives evaluated were:

A. reaction product of 2-dodecenyl succinic anhydride and tris(dipropylene glycol) phosphite
B. oleic acid
C. triethylene glycol caprylate capriate
D. methyl oleate

The results are shown in Table I. Table I illustrates that Additive A (the reaction product depicted in Equation 5 hereinabove) was superior to both triethylene glycol caprylate capriate and methyl oleate. It gave a slightly higher coefficient of friction (COF) than oleic acid at high concentration and a slightly lower COF than oleic acid at lower concentration. Thus, Additive A was an effective boundary (film strength) additive. Friction bandwidths for Additive A and oleic acid were relatively narrow. The friction bandwidths for both triethylene glycol caprylate capriate and methyl oleate were wide indicating erratic friction modification. In addition, methyl oleate showed a large increase in friction toward the end of the run. This is attributable to massive additive failure in this test and the inability of the additive to prevent the transfer of aluminum to steel.

At 1.5 x $10^{-5}$ $moles \cdot L^{-1}$, Additive A gave a lower friction coefficient than oleic acid. Also, oleic acid showed a large increase in friction toward the end of the run. Additive A gave a uniform average friction throughout the run. These results show that the subject additives of this invention are effective boundary additives.

TABLE I

| Oiliness Additive Effectiveness | | | | |
|---|---|---|---|---|
| Conc. Moles $L^{-1}$ | COF | COF | COF | COF |
| | A | B | C | D |
| 3.8 x $10^{-2}$ | not soluble | 0.107 | 0.126 | 0.117 |
| 9.2 x $10^{-3}$ | 0.126 | 0.107 | 0.126 | 0.136 |
| 3.8 x $10^{-3}$ | 0.126 | 0.107 | 0.136 | 0.165 |
| 9.5 x $10^{-4}$ | 0.126 | 0.117 | 0.165 | 0.235 |
| 2.4 x $10^{-4}$ | 0.136 | 0.126 | 0.282 | 0.272 |
| 6.0 x $10^{-5}$ | 0.155 | 0.175 | 0.311 | 0.311 |
| 1.5 x $10^{-5}$ | 0.175 | 0.272 | | . |
| 3.7 x $10^{-6}$ | 0.252 | | | |
| A. reaction product of 2-dodecenyl succinic anhydride and tris(dipropylene glycol) phosphite in 3:1 molar ratio<br>B. oleic acid<br>C. triethylene glycol caprylate capriate<br>D. methyl oleate | | | | |

Example 2

The extreme pressure characteristics of various additives including mineral seal oil and Additives A through G defined in Table II were determined by two standard ASTM tests, i.e., Falex EP test (ASTM D3233) and the Four Ball EP test (ASTM D2783). These tests involved steel-steel contacts at high unit loading.

The results are shown in Table II.

In the Four Ball test, straight mineral seal oil welded at 141 kg, and the addition of 10% oleic acid (the best conventional additive from the MOFISS study) did not improve performance. The additions of Additives A and E improved the weld points to 251 kg (phosphite based) and 316 kg (phosphate based), respectively, demonstrating values higher than the standard for phosphorus extreme pressure capability, triscresyl phosphate (TCP) which welds at 178 kg.

In the Falex test, straight mineral seal oil failed at less than 500 lb load, whereas mineral seal oil containing 10% Additive A maintained loads at 2800 lb before failure--higher than conventional additive oleic acid (867 lbs) and with commercial extreme pressure additives zinc dialkyl-dithiophosphate (2450 lbs) and tricresyl phosphate (1550 lbs).

TABLE II

| Extreme Pressure Activity | | | |
|---|---|---|---|
| Oil | Falex Failure Load (1) lb (ASTM D3233) | Four Ball Weld (ASTM D2783) | Blend Viscosity at 40 °C |
| Mineral Seal Oil | <500 | 158 kg | 4.0 cs |
| 5% Additive A | 1950 ± 50 | 200 kg | 5.16 cs |
| 10% Additive A | 2800 ± 87 | 251 kg | 6.53 cs |
| 10% Additive E | - | 316 kg | - |
| 10% Additive B | 867 ± 29 | 158 kg | 5.21 cs |
| 0.5% Additive F | 2317 ± 29 | 141 kg | 4.44 cs |
| 5% Additive F | 2450 ± 200 | 141 kg | 4.79 cs |
| 5% Additive G | 1417 ± 29 | 178 kg | 4.47 cs |
| 10% Additive G | 1550 ± 50 | 178 kg | 4.62 cs |
| A. reaction product of 2-dodecenyl succinic anyhydride and tris(dipropylene glycol) phosphite in 3:1 molar ratio<br>B. oleic acid<br>C. triethylene glycol caprylate capriate<br>D. methyl oleate<br>E. reaction product of 2-dodecenyl succinic anyhydride and tris(dipropylene glycol) phosphate in 3:1 molar ratio<br>F. commercial zinc dialkyldithiophosphate extreme pressure antiwear additive<br>G. tricresyl phosphate extreme pressure additive | | | |
| (1) average of 3 runs with standard deviation | | | |

Example 3

A strip of lubricated aluminum was pulled at 0.1524 m/min under a weighted sled restrained by a chain connected to a transducer for measuring frictional force. The sled was supported by three ball bearings. The test was carried out under low viscosity, highly loaded conditions, and measured boundary friction.

At low velocity, friction is proportional to the equilibrium concentration of additive absorbed on the strip surface and independent of the rate of absorption within the rate limits additives are believed to react.

The base oil was Exxon Norpar 15 (TM) linear parraffin having a viscosity of 2.49 $mm^2 \cdot s^{-1}$ at 40 °C. The base oil provided essentially no boundary protection and gave a friction coefficient of 0.311. The friction coefficient of Norpar 15 (TM) containing additives will be lower than this value and will reach a minimum at that concentration where full surface coverage first occurs and will remain constant at higher additive concentrations.

The minimum coefficient of friction reached by each additive and the concentration required to reach this minimum are measures of effectiveness of the additive. In general, additives which give lower coefficients of friction at full surface coverage and reach these minimum friction coefficients at lower concentrations are considered more effective.

Typical film-forming, friction-modifying additives are long-chain organic compounds containing a functional group, i.e., alcohol, ester, carboxylic acid, amine, or amide. In these evaluations, two of the new additives were compared to three conventional additives. The additives evaluated were:

A. tris methylene-3-carboxyl-isoeicosenyl phosphine oxide
B. tris methylene-3-carboxyl-tetradecenyl phosphine oxide
C. oleic acid
D. triethylene glycol caprylate capriate
E. methyl oleate

The results are shown in Table III and illustrated in Figure 1.

Table III shows that at a concentration of 3.8 x $10^{-2}$ $moles \cdot L^{-1}$, all additives reached minimum friction coefficients and that Additives A, B, and oleic acid exhibited identical friction coefficients, i.e., 0.107, whereas triethylene glycol caprylate capriate and methyl oleate had higher friction coefficients and were therefore less effective. At a concentration of 9.5 x $10^{-4}$ $moles \cdot L^{-1}$, the friction coefficient of Additive B remained at 0.107, whereas Additive A and oleic acid increased to 0.117 indicating that Additive B was more effective. Friction bandwidths for Additives A, B, and oleic acid were relatively narrow, whereas the friction bandwidths for both triethylene glycol caprylate capriate and methyl oleate were wide, indicating erratic consistency in modifying friction. In addition, methyl oleate showed a large increase in friction toward the end of the run. This is typical of massive additive failure in this test and is attributable to the inability of the additive to prevent the transfer of aluminum to steel.

At 1.5 x $10^{-5}$ $moles \cdot L^{-1}$, Additives A and B both gave lower friction coefficients than oleic acid. Also, oleic acid showed a large increase in friction toward the end of the run, whereas Additives A and B gave uniform average friction throughout the run. These results show the lubricant additives of this invention are superior to conventional acids and esters.

## Example 4

The extreme pressure characteristics of the additives were determined by two standard ASTM tests, i.e., Falex EP test (ASTM D3233) and the Four Ball EP test (ASTM D2783). The results are shown in Table IV. These tests both involved steel-steel contacts at high unit loading.

In the Four Ball test, straight mineral seal oil welded at 141 kg, and the addition of 10% oleic acid (the best conventional additive from the MOFISS study) did not improve performance. The additions of Additives A and B at 10% improved the weld points to 158 kg and 200 kg, respectively, demonstrating mild to good extreme pressure characteristics.

In the Falex test, straight mineral seal oil failed at less than 500 lb load, oleic acid improved the situation slightly, whereas Additives A and B both maintained loads in excess of 1200 lb before failure.

TABLE III

| MOFISS Test for Oiliness Additive Effectiveness | | | | | |
|---|---|---|---|---|---|
| Conc. Moles $L^{-1}$ | COF | COF | COF | COF | COF |
| | A | B | C | D | E |
| $3.8 \times 10^{-2}$ | 0.107 | 0.107 | 0.107 | 0.126 | 0.117 |
| $9.2 \times 10^{-3}$ | 0.107 | 0.107 | 0.107 | 0.126 | 0.136 |
| $3.8 \times 10^{-3}$ | 0.107 | 0.107 | 0.107 | 0.136 | 0.165 |
| $9.5 \times 10^{-4}$ | 0.117 | 0.107 | 0.117 | 0.165 | 0.235 |
| $2.4 \times 10^{-4}$ | 0.126 | 0.117 | 0.126 | 0.282 | 0.272 |
| $6.0 \times 10^{-5}$ | 0.136 | 0.136 | 0.175 | 0.311 | 0.311 |
| $1.5 \times 10^{-5}$ | 0.146 | 0.175 | 0.272 | | |
| $3.7 \times 10^{-6}$ | 0.243 | 0.252 | | | |

A. tris methylene-3-carboxyl-isoeicosenyl phosphine oxide (1)
B. tris methylene-3-carboxyl-tetradecenyl phosphine oxide (1)
C. oleic acid
D. triethylene glycol caprylate capriate
E. methyl oleate

(1) and isomer as shown in Equation 7

TABLE IV

| Test for Extreme Pressure Activity | | |
|---|---|---|
| Oil | Falex Failure Load (1) lb (ASTM D3233) | Four Ball Weld (ASTM D2783) |
| Mineral Seal Oil (4cs) | <500 | 141 kg |
| Mineral Seal Oil (4cs) & 10% Additive A | --- | 158 kg |
| Mineral Seal Oil (4cs) & 10% Additive B | 1350 ± 71 | 200 kg |
| Mineral Seal Oil (4cs) & 5% Additive B | 1233 ± 29 | |
| Mineral Seal Oil (4cs) & 10% Additive C | 867 ± 29 | 141 kg |

A. tris methylene-3-carboxyl-isoeicosenyl phosphine oxide
B. tris methylene-3-carboxyl-tetradecenyl phosphine oxide
C. oleic acid

(1) Average of 3 runs with standard deviation

While the invention has been described in terms of preferred embodiments, the claims appended hereto are intended to encompass all embodiments which fall within the spirit of the invention.

## Claims

1. A composition, useful as a lubricant, characterized by comprising at least one organic compound containing:

(a) a carboxylic acid functional group;
(b) an organic ester function group; and

(c) a phosphine, phosphite or phosphate extreme pressure functionality.

2. A composition as set forth in claim 1, characterized by said compound comprising an organic ether linkage.

3. A composition as set forth in claim 1, characterized by comprising at least one compound produced by reacting tris(oxyalkylene glycol) phosphite or tris(oxyalkylene glycol) phosphate and a succinic acid or anhydride which is alkyl-alkaryl-, aralkyl-, or alkenyl-substituted, or by reacting tris(oxyalkylene glycol) phosphite and a succinic acid or anhydride which is alkyl-, alkaryl-, aralkyl-, or alkenyl-substituted followed by oxidation of the phosphite group to phosphate, or by reacting tris-hydroxymethyl phosphine oxide and a succinic anhydride which is alkyl-, alkaryl-, aralykl-, or alkenyl-substituted.

4. A composition as set forth in any one of claims 1 to 3, characterized by comprising mineral oil or synthetic oil useful as an oil-based lubricant, or comprising one or more of said oils combined with water.

5. A composition as set forth in claim 1, characterized in that said compound is an alkali metal salt, alkaline earth metal salt, amine salt, tin salt, zinc salt, or lead salt.

6. A composition as set forth in any one of claims 1 to 3, characterized in that said compound is tris-(dipropylene glycol) phosphite, tris(dipropylene glycol) phosphate, tris methylene-3-carboxyl-isoeicosenyl phosphine oxide or tris methyl-3-carboxyl-tetradecenyl phosphine oxide.

7. A method of producing a lubricant, characterized by comprising reacting tris-hydroxymethyl phosphine oxide, tris(oxyalkylene glycol) phosphite or tris(oxyalkylene glycol) phosphate and a succinic acid or anhydride which is alkyl-, alkaryl-, aralkyl-, or alkenyl-substituted, and optionally forming an alkali metal salt, alkaline earth metal salt, amine salt, a tin salt, zinc salt, or lead salt of the lubricant.

8. The method as set forth in claim 7, characterized by comprising mixing said lubricant with mineral oil or synthetic oil to form an oil-based lubricant formulation, and/or dispersing said lubricant into a water-based lubricant formulation.

9. A method of metal working such as rolling, characterized by comprising use of a composition as defined in any one of claims 1 to 6 as a lubricant.

10. A method as set forth in claim 9, characterized in that said composition is as defined in claim 4 in which said oil is synthetic and said synthetic oil comprises polybutene, polyalphaolefin, polyglycol, or synthetic ester.

11. A method as set forth in claim 10, characterized by lubricating non-ferrous metal rolling.

12. An organic molecular compound, useful as a lubricant, characterized by containing:

(a) a carboxylic acid functional group;

(b) an organic ester function group; and

(c) a phosphine, phosphite or phosphate extreme pressure functionality.

13. An oxyalkylene glycol phosphate or oxyalkylene glycol phosphite partial ester of a substituted or unsubstituted polycarboxylic acid.

14. An oxyalkylene glycol phosphate or oxyalkylene glycol phosphite as claimed in claim 13, characterized in that said polycarboxylic acid is succinic acid which may be alkenyl-substituted, alkyl-substituted, alkaryl-substituted or aralkyl-substituted.

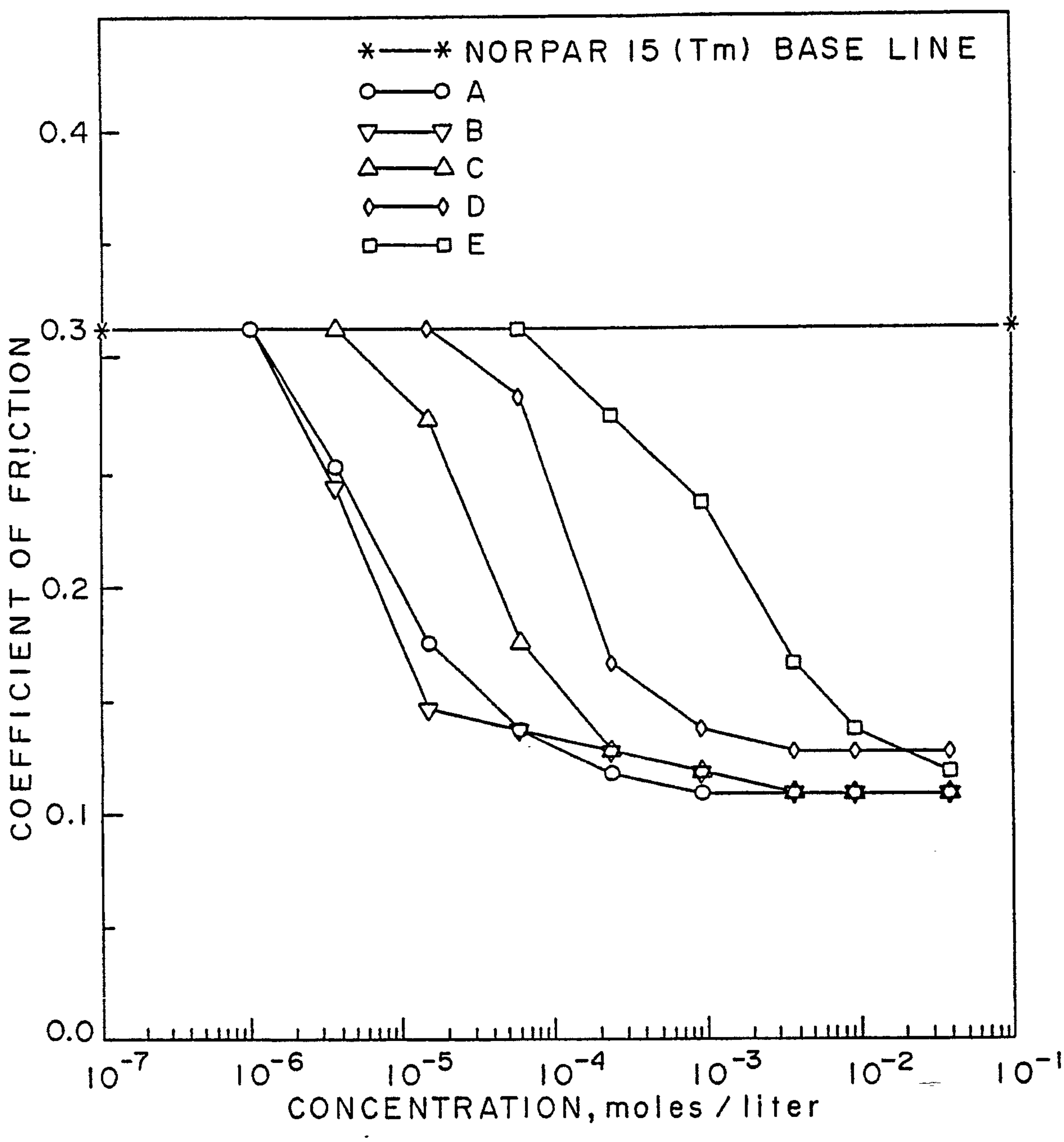
NORPAR 15 (Tm) BASE LINE
A
B
C
D
E
0.4
0.3
0.2
0.1
0.0
COEFFICIENT OF FRICTION
$10^{-7}$ $10^{-6}$ $10^{-5}$ $10^{-4}$ $10^{-3}$ $10^{-2}$ $10^{-1}$
CONCENTRATION, moles / liter